# EUROPEAN PATENT APPLICATION

(11) **EP 3 091 446 A1**
(43) Date of publication of application: **09.11.2016**
(21) Application number: 16150821.3
(22) Date of filing: 11.01.2016
(51) Int. Cl.: G06F 17/28, G06T 11/00, H04N 1/32

(54) **SYSTEM FOR SUPPORTING MULTIPLE LANGUAGES IN WEBTOONS**

(30) Priority: 07.05.2015 KR 20150063919
(71) Applicant: Topcomics Co., Ltd., Seoul 08390 (KR)
(72) Inventor: KIM, CHUN GON, 03912 Seoul (KR)
(74) Representative: Cabinet Chaillot

(57) **Abstract**

Disclosed is a multiple language support system including a server system and a client system, wherein the server system inserts a 2-dimensional barcode, including dialog text and narration text in multiple languages and position information of areas in which the text is to be written, into a webtoon image, and the client system interprets the 2-dimensional barcode, generates a text layer comprising dialog text and narration text in a language selected by a user, and displays the combination of the webtoon image and the text layer.

The multiple language support system includes a text information generation unit for generating text information including text and position information about the text, a text code image generation unit for generating a text code image by converting the text information into a 2-dimensional barcode, and an image synthesis unit for generating multilingual webtoon content by combining the webtoon image with the text code image.

## Description

### BACKGROUND OF THE INVENTION

### Field of the Invention

The present invention generally relates to a system for supporting multiple languages in webtoons. More particularly, the present invention relates to a multiple language support system including a server system and a client system, wherein the server system inserts a 2-dimensional barcode, including dialog text, narration text, and position information about areas in which the text is to be written, into a webtoon image, and the client interprets the 2-dimensional barcode, generates a text layer comprising the dialog text and narration text in the language selected by a user, and displays a combination of the webtoon image and the generated text layer.

### Description of the Related Art

With the development of Internet-related technology, the Internet has created new culture. Smart phones, of which the penetration rate has rapidly increased, are intelligent terminals having both the functions of mobile phones and those of computers, such as Internet communication, information retrieval, and the like. Smart phones have become necessities for most people in modern life.

Meanwhile, the spread of the Internet and smart phones has made big changes in the comic industry. Cartoons published in book form for lending libraries and bookstores have been replaced by webtoons in digital format. The word 'webtoon' is a portmanteau of 'web' and 'cartoon', and commonly means a cartoon provided over the Internet. Currently, not only online cartoons, published by scanning comic books, but also animated cartoons that use video, voiceovers, Flash technology, and the like are being provided.

In the early stages, webtoons consisted only of short strips that dealt with emotional material or daily life. However, webtoons have developed to have a narrative structure and to use a specific presentation method based on scrolling. The offline publishing market for comic books has dwindled due to comic book rental stores and cartoons produced by scanning, but webtoons have been making progress according to changes in the digital environment, and now lead the comic market in Korea.

Currently, Korea is the only place in the world to have built a large and stable online cartoon market. Also, thanks to the participation of many budding cartoonists and continuous support from the Korean government, technology concerning online cartoons is expected to develop in Korea. Based on this online cartoon technology in Korea, the overseas online cartoon market is predicted to expand. This is because online cartoons are free from capital constraints and limitations related to time and place.

In order to provide webtoons in other countries, translation into corresponding languages is necessary. Currently, in order to translate the content of a webtoon into another language, it is necessary to repeatedly perform the following process. That is, the image file of each page must be opened in a program such as Photoshop or the like, the content must be translated into the corresponding language and input to substitute for the original content, the text is rearranged if necessary, and the changed image file is saved.

This process for supporting the multilingual service of a webtoon is inconvenient because people must translate content, modify images, and rearrange text for each page. Also, because it is necessary to produce the webtoon in advance and repeatedly store the same webtoon as many times as there are languages to be translated into, a large amount of storage is required, making it difficult to provide many webtoons in various languages. Furthermore, unless a webtoon has been produced in a corresponding language in advance, the webtoon in the corresponding language may not be provided.

As the first related patent pertaining to the support of multilingual webtoon service, there is Korean Patent Application Publication No. 2015-0003982, titled "A cartoon data supply system and method". The first related publication discloses a cartoon data supply system and method in which cartoon data are generated by combining image data of a cartoon with text data of the cartoon, which have been separately stored in a database server, and are transmitted to a client or an application provision system.

In the cartoon data supply system according to the first related patent, one or more clients and one or more application provision systems are physically connected with each other over a network, and the cartoon data supply system provides cartoon data in response to a request for the corresponding cartoon data from the client or the application provision system. The cartoon data supply system includes: a cartoon image database for storing one or more pieces of cartoon image data; a text database for storing character codes of one or more pieces of text data included in the cartoon image data and position information and font information about the text data; image data and text data modules for preparing a response to the request for cartoon data from the client or the application provision system; a font control module for generating font image data corresponding to the text data based on the font information; a cartoon data generation module for generating cartoon data by combining the cartoon image data with the font image data corresponding to the text data in response to the request for the cartoon data from the client or the application provision system; and a cartoon data transmission module for transmitting the cartoon data using one or more protocols capable of transmitting the corresponding cartoon data in response to the request for the cartoon data from the client or the application provision system.

According to the first related patent described above, the cartoon data supply system combines the cartoon image data with the text data corresponding to a selected language, and transmits the combined data to a client. Specifically, when the client requests cartoon data in a first language, the cartoon image data and text data corresponding to the first language are combined and transmitted to the client. Then, when the client requests cartoon data in a second language, the cartoon image data and text data corresponding to the second language are combined and transmitted to the client. Therefore, the cartoon data supply system repeatedly transmits the same cartoon image data whenever the client requests the cartoon in a different language. In other words, network traffic is repeatedly generated for the same image data.

As the second related patent pertaining to the support of multilingual webtoon service, there is Korean Patent Application Publication No. 2006-0122004, titled "Internet cartoon service method for supporting multiple languages and system thereof". The second related publication discloses a method in which the image area and text area of a cartoon are separated, text and a textbox having a polygon form are generated from the text area, the text is translated into multiple languages, the text, translated into a language selected by a user, and the image data overlap each other, and the result is provided over a network.

The Internet cartoon service method for supporting multiple languages according to the second related patent includes: a basic information generation step in which basic information about the cartoon that is to be produced as an Internet cartoon is received and stored in a database; a cartoon input step in which original cartoon images, including an image area and a text area, are received and stored in the database; a textbox generation step in which the text area, included in each page of the original cartoon images input in the cartoon input step, is determined as an edit area having a polygon form in order to be separated from the image area, and a textbox is generated from the separated edit area and is stored in the database; a text generation step, in which text is generated from letters to be displayed in the textbox generated by the textbox generation step and is stored in the database; a text translation step in which the text, generated by the text generation step, is translated into a foreign language and is newly stored as translated text in the database; and an Internet cartoon provision step, in which Internet cartoon data generated through the above steps are provided to a client.

According to the second related patent described above, the Internet cartoon service system extracts an original cartoon image and a textbox including text in a language selected by a user and transmits them to a client. Then, the client displays the original cartoon image and the textbox such that they are overlaid on one another. In the case of the second related patent, because the original cartoon image and the textbox including text in the language selected by the user are individually provided through network, the service for supporting multiple languages may not be provided smoothly depending on the network connection status.

The foregoing is intended merely to aid in the understanding of the background of the present invention, and is not intended to mean that the present invention falls within the purview of the related art that is already known to those skilled in the art.

### Documents of Related Art

(Patent Document 1) Korean Patent Application Publication No. 2015-0003982; and
(Patent Document 2) Korean Patent Application Publication No. 2006-0122004.

### SUMMARY OF THE INVENTION

Accordingly, the present invention has been made keeping in mind the above problems occurring in the related art, and the present invention is intended to provide a system for supporting multiple languages in webtoons, the system downloading the content of a webtoon only once without incurring additional network traffic so as to enable a user to selectively enjoy the corresponding webtoon in at least two languages.

In order to achieve the above object, a system for supporting multiple languages in a webtoon, according to the present invention, includes: a text information generation unit for generating text information that includes dialog text and narration text in multiple languages and position information about an area in which the text is to be written; a text code image generation unit for generating a text code image by converting the text information generated by the text information generation unit into a 2-dimensional barcode; and an image synthesis unit for generating multilingual webtoon content by combining a webtoon image with the text code image.

Also, the system for supporting multiple languages in a webtoon, according to the present invention, includes: a text code image extraction unit for extracting a text code image from multilingual webtoon content in which a webtoon image is combined with the text code image, which is a 2-dimensional barcode acquired by converting text information including dialog text and narration text in multiple languages and position information about an area in which the text is to be written; a selected language text extraction unit for receiving information about a selected language and extracting text and position information, corresponding to the selected language, from the text code image; a text layer generation unit for generating a text layer by arranging the text in the selected language at a corresponding position; and a layer composition unit for combining the multilingual webtoon content with the text layer and displaying a webtoon in the selected language on a screen.

Also, the system for supporting multiple languages in a webtoon, according to the present invention, includes: a multiple language support system for generating multilingual webtoon content to be provided to a user terminal via a webtoon service web server; and a webtoon provision unit, installed in the user terminal, for receiving the multilingual webtoon content and providing multilingual service to a user of the user terminal.

The multiple language support system includes: a text information generation unit for generating text information that includes dialog text and narration text in multiple languages and position information about an area in which the text is to be written, a text code image generation unit for generating a text code image by converting the text information generated by the text information generation unit into a 2-dimensional barcode, and an image synthesis unit for generating multilingual webtoon content by combining a webtoon image with the text code image.

The webtoon service provision unit includes a text code image extraction unit for extracting the text code image from the multilingual webtoon content, a selected language text extraction unit for receiving information about a selected language and extracting text and position information corresponding to the selected language from the text code image, a text layer generation unit for generating a text layer by arranging the text in the selected language at a corresponding position, and a layer composition unit for combining the multilingual webtoon content with the text layer and displaying a webtoon in the selected language on a screen.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a block diagram illustrating a communication system environment to which the present invention is applied;
FIG. 2 is an embodiment of a multiple language support system according to the present invention;
FIG. 3 is an embodiment of multilingual webtoon content generated by a multiple language support system according to the present invention; and
FIG. 4 is a block diagram illustrating a webtoon provision unit, installed in a user terminal, for receiving multilingual webtoon content according to the present invention and providing multilingual service to a user of the user terminal.

### DETAILED DESCRIPTION OF THE INVENTION

Hereinafter, a system for supporting multiple languages in webtoons according to an embodiment of the present invention will be described in detail with reference to the accompanying drawings.

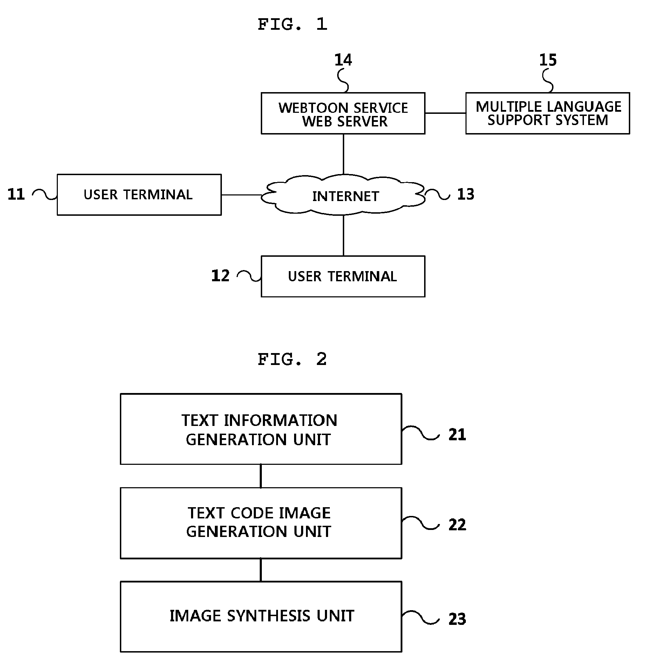

FIG. 1 is a block diagram illustrating a communication system environment to which the present invention is applied.

Multiple user terminals 11 and 12 use webtoon service by accessing a webtoon service web server 14 over the Internet 13. In this case, multilingual webtoon content is created by a multiple language support system 15 that is connected to the webtoon service web server 14, and the multilingual webtoon content is provided to the user terminals via the webtoon service web server 14.

Here, the user terminals 11 and 12 may include not only common desktop computers but also terminals having memory and a microprocessor for computation, such as laptops, workstations, palmtops, Personal Digital Assistants (PDAs), web-pads, smart phones, tablet PCs, and the like.

A user accesses the webtoon service web server 14 over the Internet 13 using the user terminal 11 or 12. The webtoon service web server 14 provides the multilingual webtoon content, requested by the user terminal 11 or 12, in downloadable or streamed form, to the corresponding user terminal 11 or 12, whereby the user may enjoy the webtoon in multiple languages.

Generally, webtoon content comprises images, word balloon areas in which dialog between characters is written, and caption areas in which passages for providing the word of a narrator, background information, actions of the characters and the like are written. Also, webtoons have a structure in which an image layer corresponding to an image and a text layer including dialog and narration are separated, or a structure in which the two layers are not separated but the image and text are combined as a single image.

The multilingual webtoon content according to the present invention includes a webtoon image and a text code image. The webtoon image is a general web cartoon image. The text code image is a 2-dimensional matrix barcode that includes dialog text and narration text in multiple languages and position information about each area in which the text is to be written. The position information about each area may be represented by the coordinates for the top left and bottom right corners of the area.

The following Table 1 is an example of the text information included in the text code image.

**[Table 1]**

| Number | Type (caption/dialogue) | Position of area | First language | Second language | Third language |
|---|---|---|---|---|---|
| 1 | Dialogue | (1,4), (2,10) | 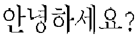 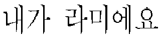 | Hello! I am Lamy. | 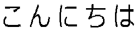 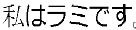 |

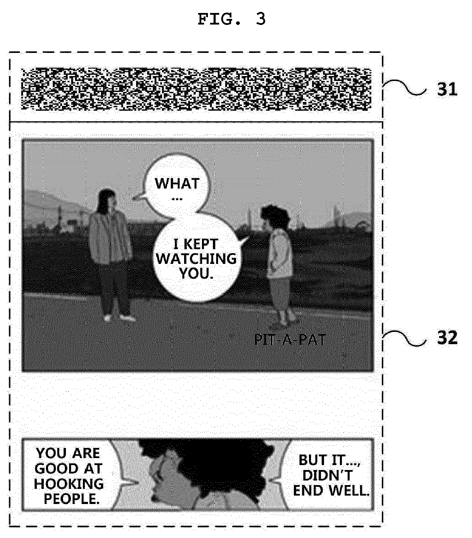

FIG. 2 is an embodiment of a multiple language support system according to the present invention, and FIG. 3 is an embodiment of multilingual webtoon content generated using the multiple language support system.

As illustrated in FIG. 2, the multiple language support system includes a text information generation unit 21 for receiving webtoon images and generating text information, including dialog text and narration text in multiple languages and position information about word balloon areas and caption areas in which the dialog text and the narration text are to be written, a text code image generation unit 22 for generating a text code image by converting the text information, generated by the text information generation unit 21, into a 2-dimensional barcode, and an image synthesis unit 23 for generating multilingual webtoon content by combining the webtoon image with the text code image.

As illustrated in FIG. 3, it is desirable for the text code image 31 to be inserted into the webtoon image 32 in order to create a single multilingual webtoon content file. Also, it is desirable for the text code image 31 to be located in the top area of the webtoon image 32.

In FIG. 3, the color of the text code image is shown to be visibly distinguished from the background color for better understanding, but the present invention is not limited to this example. It is desirable for the text code image to have a color that is neither used in the webtoon image nor visibly distinguishable from the background color. The text code image may have a color that is not used in the webtoon image and has a difference of less than 15 in an RGB value from the background color (for example, if the RGB value of the background color is R:255, G:255, and B:255, the RGB value of the color of the text code image may be R:250, G:250, and B:250).

As described above, if the text code image has a color that is not used in the webtoon image, the text code image may be accurately extracted from the webtoon image. Also, when the text code image has a color that is not visibly distinguished from the background color, because the user of the webtoon may not visually perceive the text code image, the user may be saved from the negative experience of downloading the text code image.

Also, FIG. 3 illustrates an example in which the word balloon area and caption area of the multilingual webtoon content are filled with text in the original language, but without limitation to this example, the word balloon area and caption area may be left blank.

The operation of the multiple language support system is described with reference to FIG. 2. The text information generation unit 21 produces dialog text and narration text, which are necessary for the webtoon, in multiple languages, and generates text information including the produced text and information about positions of the word balloon area and caption area in which the generated text will be written. The text code image generation unit 22 generates a text code image by converting the text information, generated by the text information generation unit 21, into a 2-dimensional barcode. The image synthesis unit 23 generates multilingual webtoon content by combining the webtoon image with the text code image.

The generated multilingual webtoon content is downloaded or streamed to the user terminals 11 and 12 via the webtoon service web server 14.

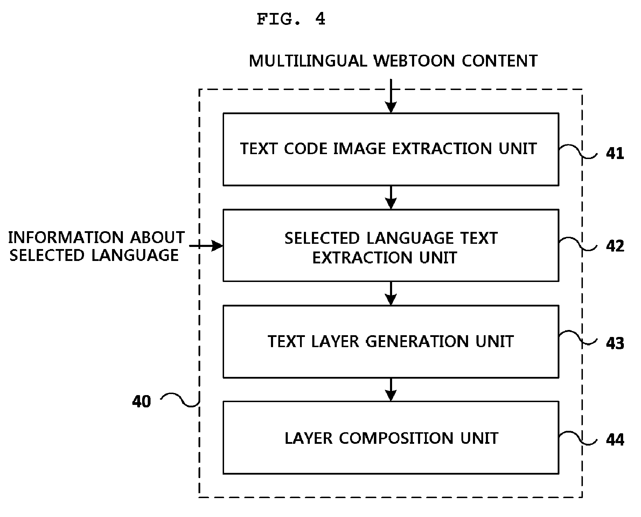

FIG. 4 is a block diagram illustrating a webtoon provision unit 40, installed in the user terminals 11 and 12, for receiving the multilingual webtoon content and providing multilingual service.

The webtoon provision unit 40 includes a text code image extraction unit 41 for extracting the text code image from the multilingual webtoon content, which is the combination of the text code image and the webtoon image, a selected language text extraction unit 42 for receiving information about a selected language and extracting the text and position information corresponding to the selected language from the text code image, a text layer generation unit 43 for generating a text layer by arranging the text in the selected language at the corresponding position, and a layer composition unit 44 for combining the multilingual webtoon content with the text layer and displaying the combination on the screen.

If the word balloon area and the caption area are filled with the original language, the text layer covers the original language and displays the text in the selected language. If the word balloon area and the caption area are blank, the text layer only displays the text in the selected language.

The position information includes the coordinates for the top left and bottom right extremities of the area, and the text layer generation unit 43 adjusts the size of the letters, the space between letters, and the width of each letter in order to arrange the text in the selected language within the corresponding area.

Also, the text layer generation unit 43 determines the text arrangement according to the selected language. In other words, the text layer generation unit 43 may arrange the text in the selected language either horizontally or vertically. For example, if English is selected, the text is arranged horizontally, whereas if Japanese is selected, the text is arranged vertically.

Also, the text layer generation unit 43 may determine the direction of the text according to the selected language. Specifically, the text may be written either left to right or right to left, depending on the selected language.

The operation of the webtoon provision unit installed in the user terminals 11 and 12 is described with reference to FIG. 4. The text code image extraction unit 41 receives the multilingual webtoon content and extracts the text code image from the content. The selected language text extraction unit 42 receives information about the selected language from the user terminals 11 and 12 or the user of the webtoon, and extracts the dialog text, the narration text, and position information about the areas in which the text will be arranged from the text code image, extracted by the text code image extraction unit 41. The text layer generation unit 43 generates a text layer by arranging the dialog text and narration text, extracted by the selected language text extraction unit 42, at the corresponding position. Finally, the layer composition unit 44 combines the multilingual webtoon content with the text layer, whereby the webtoon produced in the selected language is displayed on a screen.

When a user selects a new language, the selected language text extraction unit 42, the text layer generation unit 43, and the layer composition unit 44 operate in the new language in order to display the webtoon in the new language on a screen.

According to the present invention as described above, when webtoon content into which a text code image storing multilingual text information has been inserted is downloaded to a user terminal only once, the user may selectively enjoy the corresponding webtoon in at least two languages without needing to download additional webtoon data or text data in other languages.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. A system for supporting multiple languages in a webtoon, comprising:
a text code image extraction unit for extracting a text code image from multilingual webtoon content in which a webtoon image is combined with the text code image, which is a 2-dimensional barcode acquired by converting text information including dialog text and narration text in multiple languages and position information about an area in which the text is to be written;
a selected language text extraction unit for receiving information about a selected language and extracting text and position information, corresponding to the selected language, from the text code image;
a text layer generation unit for generating a text layer by arranging the text in the selected language at a corresponding position; and
a layer composition unit for combining the multilingual webtoon content with the text layer and displaying a webtoon in the selected language on a screen.

2. The system of claim 1, wherein:
the position information includes coordinates for top left and bottom right corners of the area in which the text is to be written, and
the text layer generation unit adjusts a size of a letter, a space between letters, and a width of a letter in order to arrange the text in the selected language within the corresponding area.

3. The system of claim 1, wherein the text layer generation unit determines an arrangement type of the text in the selected language depending on the selected language.

4. The system of claim 1, wherein the text layer generation unit determines an arrangement direction of the text in the selected language depending on the selected language.

5. A system for supporting multiple languages in a webtoon, comprising:
a multiple language support system for generating multilingual webtoon content to be provided to a user terminal via a webtoon service web server; and
a webtoon provision unit, installed in the user terminal, for receiving the multilingual webtoon content and providing multilingual service to a user of the user terminal,
wherein:
the multiple language support system comprises a text information generation unit for generating text information that includes dialog text and narration text in multiple languages and position information about an area in which the text is to be written, a text code image generation unit for generating a text code image by converting the text information generated by the text information generation unit into a 2-dimensional barcode, and an image synthesis unit for generating multilingual webtoon content by combining a webtoon image with the text code image; and
the webtoon provision unit comprises a text code image extraction unit for extracting the text code image from the multilingual webtoon content, a selected language text extraction unit for receiving information about a selected language and extracting text and position information corresponding to the selected language from the text code image, a text layer generation unit for generating a text layer by arranging the text in the selected language at a corresponding position, and a layer composition unit for combining the multilingual webtoon content with the text layer and displaying a webtoon in the selected language on a screen.
